# EUROPEAN PATENT APPLICATION

(11) **EP 2 676 944 A1**
(43) Date of publication of application: **25.12.2013**
(21) Application number: 12305727.5
(22) Date of filing: 22.06.2012
(51) Int. Cl.: C04B 28/02, C09K 8/42, C09K 8/40

(54) **Compositions and methods for completing subterranean wells**

(71) Applicant: Services Pétroliers Schlumberger, 75007 Paris (FR); Schlumberger Technology B.V., 2514 The Hague (NL); Schlumberger Holdings Limited, Tortola (VG); Prad Research Development Limited, Tortola (VG)
(72) Inventor: Michaux, Michel, 92142 clamart cedex (FR); Caritey, Jean-Philippe, 92142 Clamart Cedex (FR); Gabilly, Laurent, 92142 clamart Cedex (FR)
(74) Representative: Vandermolen, Mathieu

(57) **Abstract**

Spacer fluids that are stable at temperatures up to at least 300°C comprise water, polystyrene sulfonate and a mixture of particulate materials. The particulate materials may be chosen such that the mixture has at least a trimodal particle-size distribution. The fluids may further comprise inorganic clays, mutual solvents and surfactants.

## Description

### BACKGROUND

The statements in this section merely provide background information related to the present disclosure and may not constitute prior art.

This disclosure relates to compositions and methods for completing subterranean wells, in particular, fluid compositions and methods for completion operations during which the fluid compositions are pumped into a wellbore and make contact with subterranean rock formations.

In the course of completing oil and gas wells and the like, various types of fluids are circulated in the wellbore. These fluids include, but are not limited to, drilling fluids, spacer fluids, cement slurries and gravel-packing fluids. In addition, these fluids typically contain solid particles.

Cement slurries are usually incompatible with most drilling fluids. If the cement slurry and drilling fluid commingle, a highly viscous mass may form that can cause several problems. Cement slurry can channel through the viscous mass. Unacceptably high friction pressures can develop during the cement job. Plugging of the annulus can result in job failure. In all of these situations, zonal isolation may be compromised, and expensive remedial cementing may be required.

Consequently, intermediate fluids called preflushes are often pumped as buffers to prevent contact between cement slurries and drilling fluids. Preflushes can be chemical washes that contain no solids or spacer fluids that contain solids and can be mixed at various densities.

Chemical washes are preflushes with a density and a viscosity very close to that of water or oil. The simplest chemical wash is fresh water; however, for more efficient drilling-fluid thinning and dispersion, chemical washes that contain dispersants and surfactants are more commonly used.

Spacers are preflushes with carefully designed densities and rheological properties. Spacers are more complicated chemically than washes. Viscosifiers are necessary to suspend the solids and control the rheological properties, and usually comprise water-soluble polymers, clays or both. Other chemical components include dispersants, fluid-loss control agents, weighting agents and surfactants. A thorough discussion concerning the uses and compositions of preflushes may be found in the following publication. Daccord G, Guillot D and Nilsson F: "Mud Removal," in Nelson EB and Guillot D (eds.): Well Cementing-2nd Edition, Houston: Schlumberger (2006) 183-187*.*

For optimal fluid displacement, the density of a spacer fluid should usually be higher than that of the drilling fluid and lower than that of the cement slurry. Furthermore, the viscosity of the spacer fluid is usually designed to be higher than the drilling fluid and lower than the cement slurry. The spacer fluid ideally remains stable throughout the cementing process (i.e., no free-fluid development and no sedimentation of solids). In addition, it may be necessary to control the fluid-loss rate.

As well depth increases, the formation temperature and pressure also increase. Consequently, to maintain well control and prevent invasion of formation fluids into the wellbore, the hydrostatic pressure exerted by the drilling fluid, spacer fluid and cement slurry should be higher than or equal to the formation pressure. In deep wells, it is often necessary to prepare fluids with densities between 2037 kg/m³ (17 lbm/gal) and 2756 kg/m³ (23 lbm/gal). In addition, the bottomhole temperature sometimes exceeds 260°C (500°F).

These conditions present challenges for those designing spacer fluids with optimal densities, rheological properties, stability and fluid-loss rates. Achieving high fluid densities typically requires the addition of heavy particles comprising barite, hematite, ilmenite and haussmanite. The solid volume fraction necessary to achieve high densities is also elevated. However, keeping the particles in suspension is difficult at high temperatures, possibly leading to spacer instability. Furthermore, at elevated temperatures, it is particularly important to ensure that the spacer and the cement slurry do not interact chemically in a deleterious fashion. It would be therefore advantageous to provide means by which spacer-fluid rheological properties, stability and/or fluid-loss control may be better controlled at elevated temperatures.

### SUMMARY

In an aspect, embodiments relate to spacer compositions comprising water, a clay, a weighting agent, a cement retarder and a borate compound.

In a further aspect, embodiments relate to methods for controlling the viscosity of a spacer fluid. A spacer fluid is prepared that comprises water, a clay, a weighting agent, a cement retarder and a borate compound. The spacer fluid may then commingle with a Portland cement slurry.

In yet a further aspect, embodiments relate to methods for cementing a subterranean well having a borehole into which a casing string has been installed. A spacer fluid is prepared that comprises water, a clay, a weighting agent, a first cement retarder and a borate compound. The spacer fluid is placed in the well, followed and/or preceded by a Portland cement slurry that comprises a second cement retarder and a borate compound. The cement slurry displaces or is displaced by the spacer fluid until the cement slurry fills the annular region between the casing string and the borehole wall.

### BRIEF DESCRIPTION OF THE DRAWINGS

Figure 1 shows the relationship between thickening time and the amount of spacer-fluid contamination in a cement slurry at 260°C and 207 MPa (Example 1).

Figure 2 shows a thickening-time test of a cement slurry at 260°C and 207 MPa (Example 1). The cement slurry contained a retarder comprising a phosphonate salt and a borate salt.

Figure 3 shows a thickening-time test of a mixture composed of 25 vol% cement slurry and 75 vol% spacer fluid at 260°C and 207 MPa (Example 1).

Figure 4 shows a thickening-time test of a mixture composed of 25 vol% cement slurry and 75 vol% spacer fluid containing a retarder at 260°C and 207 MPa (Example 1). The retarder contained a phosphonate salt and a borate salt.

Figure 5 shows a thickening-time test of a mixture composed of 25 vol% cement slurry and 75 vol% spacer fluid containing a reduced amount of retarder at 260°C and 207 MPa (Example 1). The retarder contained a phosphonate salt and a borate salt.

Figure 6 shows a thickening-time test of a mixture composed of 5 vol% cement slurry and 95 vol% spacer fluid containing a reduced amount of retarder at 260°C and 207 MPa (Example 1). The retarder contained a phosphonate salt and a borate salt.

Figure 7 shows a thickening-time test of a mixture composed of 25 vol% cement slurry and 75 vol% spacer fluid containing a further reduced amount of retarder at 260°C and 207 MPa (Example 1). The retarder contained a phosphonate salt and a borate salt.

Figure 8 shows a thickening-time test of a cement slurry containing a retarder with a modified borate-salt to phosphonate-salt ratio (Example 2). The test conditions were 177°C and 69 MPa.

Figure 9 shows a thickening-time test of a mixture composed of 5 vol% cement slurry and 95 vol% spacer fluid at 177°C and 69 MPa (Example 2).

Figure 10 shows a thickening-time test of a mixture composed of 5 vol% cement slurry and 95 vol% spacer fluid containing a retarder at 177°C and 69 MPa (Example 2).

Figure 11 shows a thickening-time test of a mixture composed of 5 vol% cement slurry and 95 vol% spacer fluid containing a retarder at 177°C and 69 MPa (Example 2). The retarder concentration was reduced.

Figure 12 shows a thickening-time test of a cement slurry containing a retarder containing no borate salt (Example 3). The test conditions were 166°C and 69 MPa.

Figure 13 shows a thickening-time test of a mixture composed of 25 vol% cement slurry and 75 vol% spacer fluid at 166°C and 69 MPa (Example 3).

Figure 14 shows a thickening-time test of a mixture composed of 5 vol% cement slurry and 95 vol% spacer fluid at 166°C and 69 MPa (Example 3).

Figure 15 shows a thickening-time test of a spacer fluid prepared from a dry blend that was contaminated with Portland cement (Example 4). The test was performed at 260°C and 207 MPa.

Figure 16 shows a thickening-time test of a spacer fluid prepared from a dry blend that was contaminated with Portland cement, but contained a cement retarder (Example 4). The test was performed at 260°C and 207 MPa.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

During the cementation of a subterranean well, there may be commingling between the spacer fluid and the cement slurry. Before the cementing operation, compatibility tests may be performed to verify that no adverse rheological effects arise from the commingling. Such tests are usually performed at various cement slurry-to-spacer-fluid volume ratios-typically 95:5, 75:25, 50:50, 25:75 and 5:95. The rheological properties of the mixtures are usually measured at temperatures below about 85°C. The effects of commingling on the cement-slurry thickening time are usually conducted at the anticipated bottomhole circulating temperature (BHCT) and pressure, using mixtures containing 5 vol% and 25 vol% of spacer fluid. The same ratios are used to evaluate the effect of spacer-fluid contamination on compressive-strength development. In most cases, the presence of spacer in the cement slurry leads to longer thickening times, delayed compressive-strength development and a lower final compressive-strength value.

The authors have determined that the thickening time of some cement slurries may be dramatically shortened when the proportion of spacer fluid in the mixture is high. This effect is more likely to occur when the cement slurries are designed for high-temperature applications, and is especially likely when retarders associated with a borate compound are present. In addition, stiffening of the spacer fluid may occur when it is contaminated by cement powder. The authors have determined that both effects may be minimized by incorporating adequate concentrations of retarder and borate compound into the spacer fluid.

In an aspect, embodiments relate to a spacer composition that comprises water, a clay, a weighting agent, a cement retarder and a borate compound.

Suitable clays include (but are not limited to) bentonite, attapulgite, sepiolite and laponite.

Suitable weighting agents include (but are not limited to) silica, barite, hematite, ilmenite and manganese tetraoxide.

Suitable borate compounds include (but are not limited to) sodium pentaborate, potassium pentaborate, sodium tetraborate, boric acid and combinations thereof. The borate-compound concentration in the spacer composition may be between 0.5% and 5.0% by weight of water.

Suitable cement retarders include (but are not limited to) sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof. The retarder concentration may be between 0.1% and 5.0% by weight of water.

The spacer composition may further comprise polystyrene sulfonate, styrene sulfonate/maleic anhydride copolymer, styrene sulfonate/itaconic acid copolymer, or a combination thereof. The molecular weights of the polymers are may be between about 10,000 and 6,000,000 Daltons.

The density of the spacer composition may be between about 960 kg/m³ and 2640 kg/m³.

Those skilled in the art will recognize that the spacer composition may further comprise antifoam agents, mutual solvents, surfactants and the like.

In a further aspect, embodiments relate to methods for controlling the viscosity of a spacer fluid. A spacer fluid is prepared that comprises water, a clay, a weighting agent, a cement retarder and a borate compound. The spacer fluid may then commingle with a Portland cement slurry that comprises a cement retarder and a borate compound. The retarder in the spacer fluid need not necessarily be the same as the retarder in the cement slurry.

Suitable clays include (but are not limited to) bentonite, attapulgite, sepiolite and laponite.

Suitable weighting agents include (but are not limited to) silica, barite, hematite, ilmenite and manganese tetraoxide.

Suitable borate compounds include (but are not limited to) sodium pentaborate, potassium pentaborate, sodium tetraborate, boric acid and combinations thereof. The borate-compound concentration in the spacer fluid may be between 0.5% and 5.0% by weight of water.

Suitable first cement retarders include (but are not limited to) sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof. The retarder concentration may be between 0.1% and 5.0% by weight of water.

Suitable second cement retarders include (but are not limited to) sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof. The retarder concentration may be between 0.1% and 5.0% by weight of water.

The spacer-fluid composition may further comprise polystyrene sulfonate, styrene sulfonate/maleic anhydride copolymer, styrene sulfonate/itaconic acid copolymer, or a combination thereof. The molecular weights of the polymers may be between about 10,000 and 6,000,000 Daltons.

The density of the spacer fluid may be between about 960 kg/m³ and 2640 kg/m³. The spacer-fluid and cement-slurry temperatures may be between about 85°C and about 300°C, corresponding to the bottomhole circulating temperature.

Those skilled in the art will recognize that the spacer fluid may further comprise antifoam agents, mutual solvents, surfactants and the like.

In yet a further aspect, embodiments relate to methods for cementing a subterranean well having a borehole into which a casing string has been installed. A spacer fluid is prepared that comprises water, a clay, a weighting agent, a first cement retarder and a borate compound. The spacer fluid is placed in the well, preceded and/or followed by a Portland cement slurry that comprises a second cement retarder and a borate compound. The cement slurry displaces and/or is displaced by the spacer fluid until the cement slurry fills the annular region between the casing string and the borehole wall.

Suitable clays include (but are not limited to) bentonite, attapulgite, sepiolite and laponite.

Suitable weighting agents include (but are not limited to) silica, barite, hematite, ilmenite and manganese tetraoxide.

Suitable borate compounds include (but are not limited to) sodium pentaborate, potassium pentaborate, sodium tetraborate, boric acid and combinations thereof. The borate-compound concentration in the spacer fluid may be between 0.5% and 5.0% by weight of water.

Suitable first cement retarders include (but are not limited to) sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof. The retarder concentration may be between 0.1% and 5.0% by weight of water.

Suitable second cement retarders include (but are not limited to) sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof. The retarder concentration may be between 0.1% and 5.0% by weight of water.

The spacer-fluid composition may further comprise polystyrene sulfonate, styrene sulfonate/maleic anhydride copolymer, styrene sulfonate/itaconic acid copolymer, or a combination thereof. The molecular weights of the polymers may be between about 10,000 and 6,000,000 Daltons.

The density of the spacer fluid may be between about 960 kg/m³ and 2640 kg/m³. The spacer-fluid and cement-slurry temperatures may be between about 85°C and about 300°C, corresponding to the bottomhole circulating temperature.

Those skilled in the art will recognize that the spacer fluid may further comprise antifoam agents, mutual solvents, surfactants and the like.

Further illustration of the disclosure is provided by the following examples.

### EXAMPLES

All of the tests presented in the following examples were performed in accordance with recommended practices specified by the American Petroleum Institute (API) and the International Organization for Standards (ISO). The methods are presented in the following publication-Petroleum *and Natural Gas Industries-Cements and Materials for Well Cementing-Part* 2: *Testing of Well Cements, International Organization for Standards Publication No. 10426-2.*

### EXAMPLE 1

A cement slurry was prepared with the following composition. The ingredients are listed in amounts sufficient to prepare 1 m³ of slurry. The slurry density was 2280 kg/m³.
649 kg Dyckerhoff Black Label Class G cement
614 kg crystalline silica (315 µm average particle size)
154 kg crystalline silica (3.2 µm average particle size)
143 kg hematite (PMR300, available from Plomp Mineral Services)
283 kg manganese tetraoxide (Micromax™, available from Elkem)
9.2 kg bentonite
13.8 kg styrene sulfonate maleic anhydride copolymer (Narlex™ D72, available from Akzo Nobel)
14.8 kg styrene sulfonate polymer (Versa-TL™ 502, available from Akzo Nobel) 7.7 L antifoam agent (Type M, available from Blue Star)
77 L retarder (0.9 wt% pentasodium ethylenediamene tetramethylene phosphonate [EDTMP]; 8.81 wt% sodium pentaborate in water)
305 L water

A spacer fluid was prepared with the following composition. The spacer-fluid density was 2280 kg/m³. The ingredients are listed in amounts sufficient to prepare 1 m³ of spacer fluid.
690 kg crystalline silica (154 µm average particle size)
658 kg barite (17 µm average particle size)
449 kg micronized barite (1.5 µm average particle size)
4.2 kg bentonite
10.5 kg styrene sulfonate polymer (Versa-TL™ 502, available from Akzo Nobel) 4.8 L antifoam agent (Type M, available from Blue Star)
23.8 L mutual solvent (ethylene glycol monobutyl ether)
23.8 L surfactant (EZEFLO™ Surfactant, available from Schlumberger)
423 L water

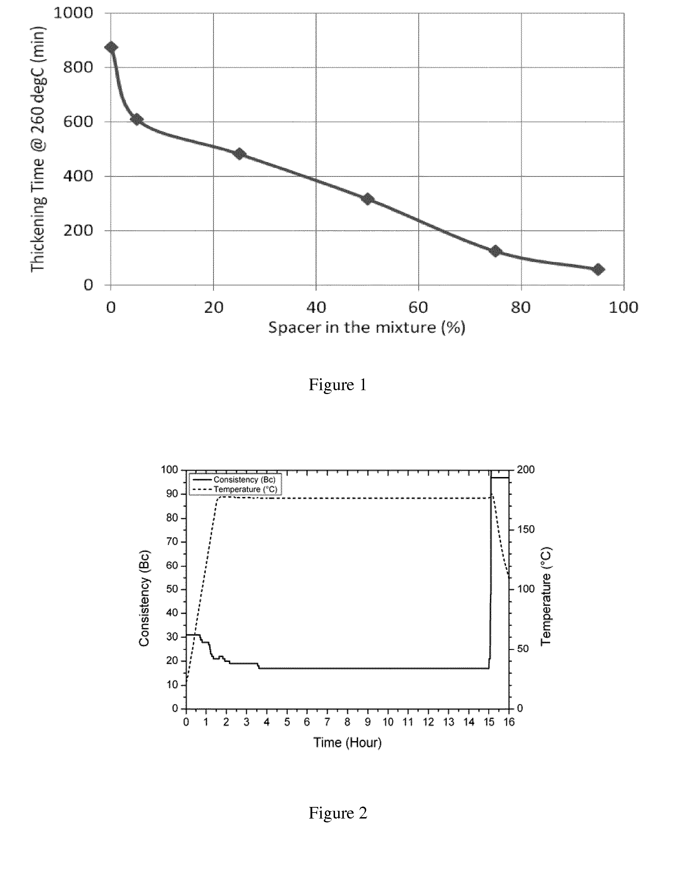

The cement slurry and spacer fluid were blended at ambient temperature at different volume ratios: 95:5; 75:25; 50:50; 25:75; and 5:95. The thickening time of the mixtures was measured at 260°C (500°F) and 207 MPa (30,000 psi), using a pressurized consistometer. The time to reach 260°C and 207 MPa was 90 minutes. The experimental results are shown in Fig. 1.

As apparent, the thickening time decreased dramatically when the percentage of spacer fluid in the mixture increased. When the spacer percentage was 95%, the thickening time was shorter than the time necessary to reach 260°C.

The thickening time test result for the uncontaminated cement slurry is shown in Fig 2. The thickening time was 14:40, and there was a "right-angle set" (i.e., short time duration between 30 Bc and 100 Bc).

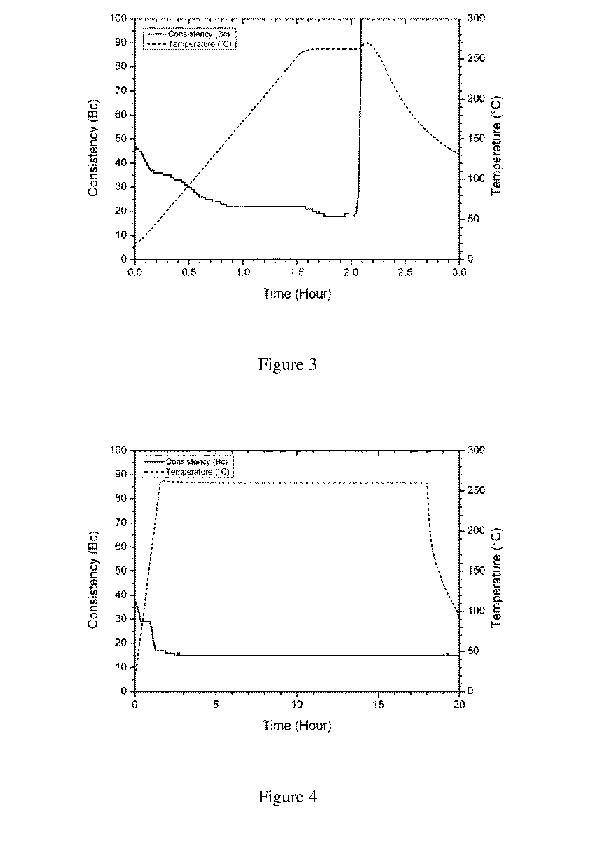

The thickening time test result for the mixture composed of 25 vol% cement slurry and 75 vol% spacer fluid is shown in Fig. 3. It is notable that this cement slurry/spacer fluid mixture thickened rapidly after only 2 hours.

The retarder used in the cement slurry and styrene sulfonate-maleic anhydride copolymer were added to the spacer. The concentrations were chosen to be similar to those present in the cement slurry. The modified spacer composition is shown below. The spacer density was 2300 kg/m³.
690 kg crystalline silica (154 µm average particle size)
658 kg barite (17 µm average particle size)
449 kg micronized barite (1.5 µm average particle size)
3.3 kg bentonite
8.3 kg styrene sulfonate polymer (Versa-TL™ 502, available from Akzo Nobel) 20.0 kg styrene sulfonate-maleic anhydride copolymer (Narlex™ D72 available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
83.3 L retarder (0.95 wt% pentasodium EDTMP; 8.81 wt% sodium pentaborate in water)
334 L water

The thickening time for a mixture composed of 25 vol% of cement slurry and 75 vol% of modified spacer fluid is shown in Fig. 4. The viscosity remained low for a period of 18 hours, after which the mixture was cooled. It is notable that this time period was longer than the cement-slurry thickening time (Fig. 2). The mixture was still fluid when the consistometer cell was opened at the end of the cooling period.

The spacer fluid was further modified by reducing the retarder and styrene sulfonate-maleic anhydride concentrations by a factor of two. The spacer composition is given below. The spacer-fluid density was 2300 kg/m³.
690 kg crystalline silica (154 µm average particle size)
658 kg barite (17 µm average particle size)
449 kg micronized barite (1.5 µm average particle size)
3.8 kg bentonite
9.5 kg styrene sulfonate polymer (Versa-TL™ 502, available from Akzo Nobel) 8.5 kg styrene sulfonate-maleic anhydride copolymer (Narlex™ D72 available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
41.7 L retarder (0.95 wt% pentasodium EDTMP; 8.81 wt% sodium pentaborate in water)
379 L water

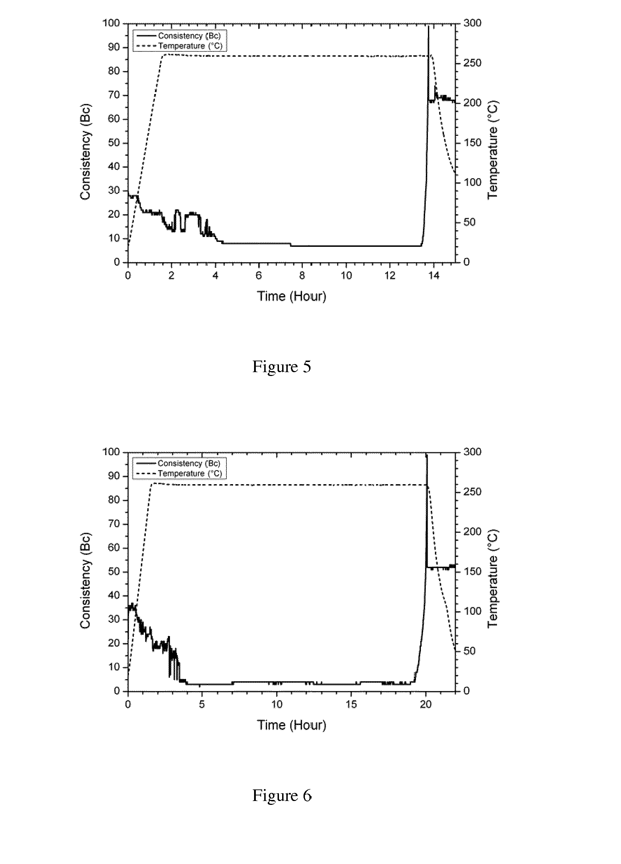

The thickening time test result for a mixture of 25 vol% cement slurry and 75% spacer fluid is shown in Fig. 5. The thickening time was 13:45, slightly shorter than that of the cement slurry.

The thickening time test result for a mixture of 5 vol% cement slurry and 95% spacer fluid is shown in Fig. 6. The thickening time of this mixture was longer than that of the 25:75 mixture.

The concentrations of retarder and styrene sulfonate-maleic anhydride concentrations were further reduced.

The modified spacer-fluid composition is given below. The spacer-fluid density was 2285 kg/m³.
690 kg crystalline silica (154 µm average particle size)
658 kg barite (17 µm average particle size?)
449 kg micronized barite (1.5 µm average particle size)
4.0 kg bentonite
10.0 kg styrene sulfonate polymer (Versa-TL™ 502, available from Akzo Nobel) 4.0 kg styrene sulfonate-maleic anhydride copolymer (Narlex™ D72 available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
19.0 L retarder (0.9 wt% pentasodium EDTMP; 8.81 wt% sodium pentaborate in water)
403 L water

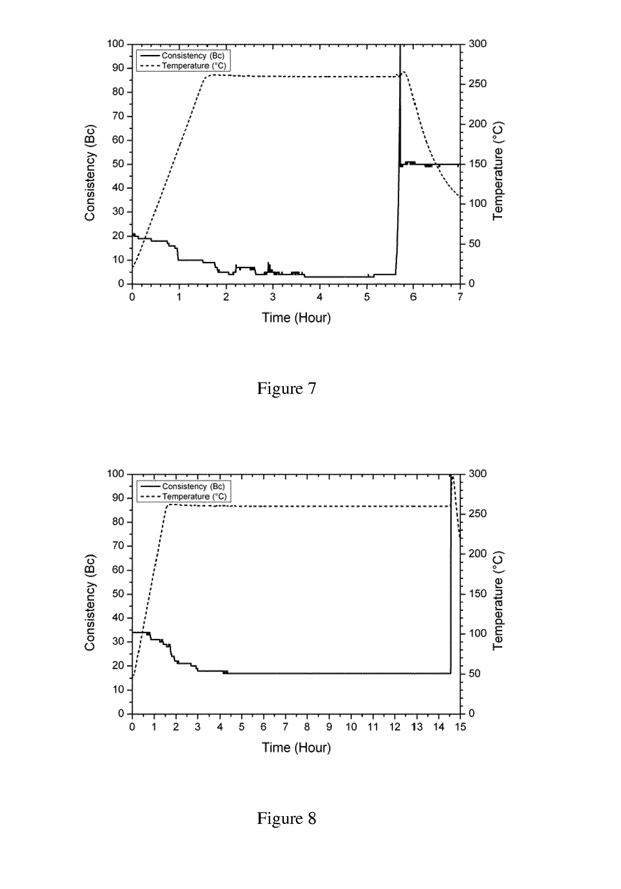

The thickening time test result for a mixture of 25 vol% cement slurry and 75% spacer fluid is shown in Fig. 7. The thickening time of this mixture was 5:43, shorter than the cement-slurry thickening time (Fig. 2).

These experimental results show that the concentration of retarder and styrene sulfonate-maleic anhydride copolymer present in the spacer fluid has an effect on premature stiffening, regardless of the cement slurry to spacer fluid volume ratio.

### EXAMPLE 2

A conventional thermally stabilized cement slurry (i.e., cement plus 35% silica flour by weight of cement) was prepared at a density of 1893 kg/m³. The cement-slurry composition is given below.
966 kg Dyckerhoff Black Label Class G cement
338 kg crystalline silica (25 µm average particle size)
9.7 kg bentonite
7.7 kg dispersant (TIC™ III Trifunctional Additive, available from Schlumberger) 4.3 L antifoam agent (Type M, available from Blue Star)
68.6 L fluid-loss additive (UNIFLAC™ L, available from Schlumberger)
68.6 L retarder (1.37 wt% pentasodium EDTMP; 8.69 wt% sodium pentaborate in water)
420 L water

A spacer fluid was prepared with the following composition. The spacer-fluid density was 2280 kg/m³.
690 kg crystalline silica (154 µm average particle size)
658 kg barite (17 µm average particle size)
449 kg micronized barite (1.5 µm average particle size)
4.2 kg bentonite
10.5 kg styrene sulfonate polymer (Versa-TL™ 502, available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
403 L water

The spacer-fluid density was higher than that of the cement slurry. The results of a thickening-time test performed at 177°C and 69 MPa are shown in Fig. 8. The thickening time of the cement slurry was about 15 hours.

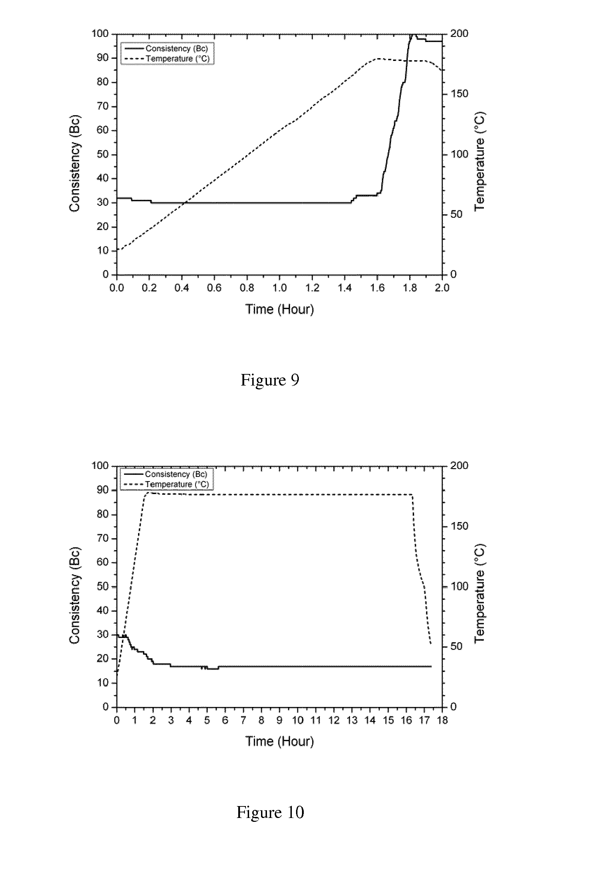

The thickening time for a mixture composed of 5 vol% cement slurry and 95 vol% spacer fluid is shown in Fig. 9. The thickening time of the mixture was only 1:47.

The spacer fluid was modified by adding a retarder. The spacer-composition is given below. The spacer-fluid density was 2284 kg/m³.
690 kg crystalline silica (154 µm average particle size)
658 kg barite (17 µm average particle size)
449 kg micronized barite (1.5 µm average particle size)
3.9 kg bentonite
9.8 kg styrene sulfonate polymer (Versa-TL™ 502, available from Akzo Nobel) 4.8 L antifoam agent (Type M, available from Blue Star)
23.8 L mutual solvent (ethylene glycol monobutyl ether)
23.8 L surfactant (EZEFLO™ Surfactant, available from Schlumberger)
29.8 L retarder (1.37 wt% pentasodium EDTMP; 8.69 wt% sodium pentaborate in water)
394 L water

The thickening-time test for the mixture composed of 5 vol% cement slurry and 95 vol% spacer fluid is shown in Fig. 10. The viscosity remained low for 16 hours, and remained so during the cooling period.

The retarder concentration in the spacer was decreased by a factor of two. The spacer-fluid composition, shown below, had a density of 2283 kg/m³.
690 kg crystalline silica (154 µm average particle size)
658 kg barite (17 µm average particle size?)
449 kg micronized barite (1.5 µm average particle size)
4.1 kg bentonite
10.2 kg styrene sulfonate polymer (Versa-TL™ 502, available from Akzo Nobel) 4.8 L antifoam agent (Type M, available from Blue Star)
23.8 L mutual solvent (ethylene glycol monobutyl ether)
23.8 L surfactant (EZEFLO™ Surfactant, available from Schlumberger)
14.3 L retarder (1.37 wt% pentasodium EDTMP; 8.69 wt% sodium pentaborate in water)
409 L water

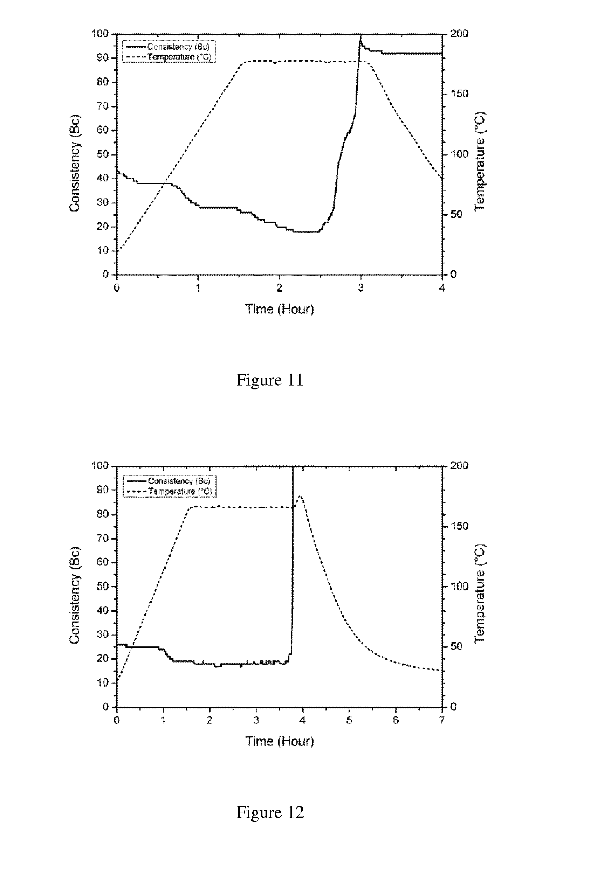

The thickening-time test result for the mixture composed of 5 vol% cement slurry and 95 vol% spacer fluid is shown in Fig. 11. The thickening time was significantly shorter than that of the cement slurry. This result confirms that the retarder concentration may be used high to prevent premature stiffening of the mixtures.

### EXAMPLE 3

A conventional thermally stabilized cement slurry (i.e., cement plus 35% silica by weight of cement) was prepared at a density of 1893 kg/m³. It was retarded with a glucoheptonate/lignin amine system that did not contain a borate salt. The cement-slurry composition (to prepare 1 m³) is given below.
972 kg Dyckerhoff Black Label Class G cement
340 kg crystalline silica (25 µm average particle size)
9.7 kg bentonite
7.8 kg dispersant (TIC™ III Trifunctional Additive, available from Schlumberger) 3.9 kg retarder (50 wt% lignin amine; 50 wt% sodium glucoheptonate)
4.3 L antifoam agent (Type M, available from Blue Star)
69.0 L fluid-loss additive (UNIFLAC™ L, available from Schlumberger)
483 L water

The spacer-fluid composition (to prepare 1 m³) is given below. The spacer density was 2280 kg/m³.
690 kg crystalline silica (154 µm average particle size)
658 kg barite (17 µm average particle size)
449 kg micronized barite (1.5 µm average particle size)
4.2 kg bentonite
10.5 kg styrene sulfonate polymer (Versa-TL™ 502, available from Akzo Nobel) 4.8 L antifoam agent (Type M, available from Blue Star)
23.8 L mutual solvent (ethylene glycol monobutyl ether)
23.8 L surfactant (EZEFLO™ Surfactant, available from Schlumberger)
423 L water

A thickening-time test was performed with the cement slurry at 166°C and 69 MPa, and the results are shown in Fig. 12. The thickening time was 3:47.

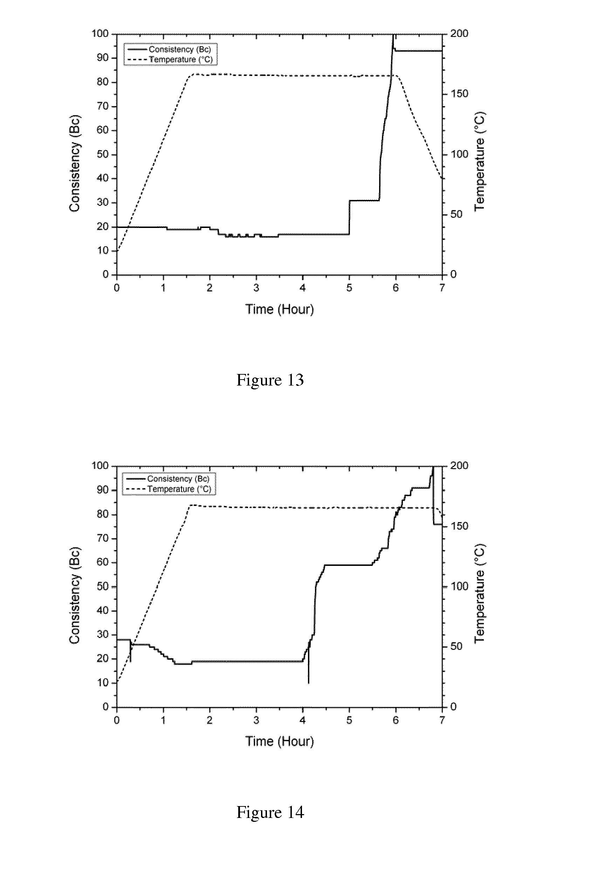

A thickening-time test was performed with a mixture composed of 25 vol% cement slurry and 75 vol% spacer fluid at 166°C and 69 MPa, and the results are shown in Fig. 13. The thickening time of the mixture was 5:55, and the viscosity began to increase after about 5 hours.

A thickening-time test was performed with a mixture composed of 5 vol% cement slurry and 95 vol% spacer fluid at 166°C and 69 MPa, and the results are shown in Fig. 14. The thickening time was 6:44, and the viscosity began to increase after about 4 hours.

These experimental results show that adding a cement retarder to the spacer fluid is less critical when the cement slurry is retarded by a compound that does not involve a borate salt.

### EXAMPLE 4

The following example illustrates what may happen if the spacer-fluid dry blend is contaminated by cement powder. The spacer dry blend was contaminated by 1 wt% Class G cement. The spacer-fluid composition (to prepare 1 m³) is shown below. The spacer-fluid density was 2280 kg/m³.
683 kg crystalline silica (154 µm average particle size)
651 kg barite (17 µm average particle size)
445 kg micronized barite (1.5 µm average particle size)
18.0 kg Dyckerhoff Black Label Class G cement
4.2 kg bentonite
10.5 kg styrene sulfonate polymer (Versa-TL™ 502, available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
423 L water

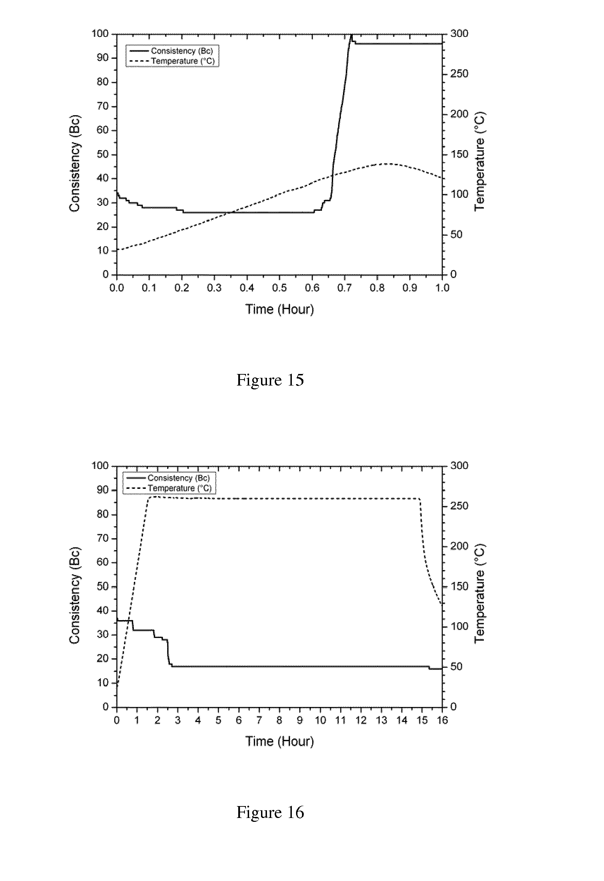

A thickening-time test was performed with the spacer fluid at 260°C and 207 MPa, and the results are shown in Fig. 15. The thickening time was 43 minutes, and the viscosity began to increase after 37 minutes. The spacer-fluid was a soft solid when removed from the consistometer cup after cooling.

The contaminated spacer system was then modified by adding a retarder and styrene sulfonate-maleic anhydride copolymer to the mix fluid. The spacer-fluid composition (to prepare 1 m³) is shown below. The spacer-fluid density was 2300 kg/m³_{.}
683 kg crystalline silica (154 µm average particle size)
651 kg barite (17 µm average particle size?)
445 kg micronized barite (1.5 µm average particle size)
18.0 kg Dyckerhoff Black Label Class G cement
3.8 kg bentonite
9.5 kg styrene sulfonate polymer (Versa-TL™ 502, available from Akzo Nobel) 8.5 kg styrene sulfonate-maleic acid copolymer (Narlex™ 72, available from Akzo Nobel)
4.8 L antifoam agent (Type M, available from Blue Star)
23.8 L mutual solvent (ethylene glycol monobutyl ether)
23.8 L surfactant (EZEFLO™ Surfactant, available from Schlumberger)
41.7 L retarder (0.95 wt% pentasodium EDTMP; 8.81 wt% sodium pentaborate in water)
379 L water

A thickening-time test was performed on this system at 260°C and 207 MPa, and the results are shown in Fig. 16. The viscosity remained low for 15 hours, and the fluid was still pourable when removed from the consistometer cup after cooling.

## Claims

1. A spacer composition, comprising water, a clay, a weighting agent, a cement retarder and a borate compound.

2. The composition of claim 1, wherein the borate compound comprises sodium pentaborate, sodium tetraborate, boric acid or combinations thereof.

3. The composition of claim 1 or 2, wherein the borate-compound concentration is between 0.5% and 5.0% by weight of water.

4. The composition of any one of claims 1-3, wherein the retarder comprises sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof.

5. The composition of any one of claims 1-4, wherein the retarder concentration is between 0.1% and 5.0% by weight of water.

6. The composition of any one of claims 1-5, wherein the composition further comprises polystyrene sulfonate, styrene sulfonate/maleic anhydride copolymer, styrene sulfonate/itaconic acid copolymer, or a combination thereof.

7. The composition of any one of claims 1-6, wherein the density is between 960 and 2640 kg_{/}m³.

8. A method for cementing a subterranean well, having a borehole into which a casing string has been installed, comprising:
(i) preparing a spacer that comprises water, a clay, a weighting agent, a first cement retarder and a borate compound;
(ii) placing the spacer fluid in the well, followed and/or preceded by a Portland cement slurry that comprises a second cement retarder and a borate compound.

9. The method of claim 8, wherein the first and/or the second cement retarder comprises sodium gluconate, calcium gluconate, sodium glucoheptonate, calcium glucoheptonate, sodium lignosulfonate, calcium lignosulfonate, salts derived from amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid and bis(hexamethylene triamine pentamethylene phosphonic acid), or combinations thereof.

10. The method of any one of claims 8-9, wherein the borate-compound concentration in the spacer fluid is between 0.5% and 5.0% by weight of water.

11. The method of any one of claims 8-10, wherein the retarder concentration in the spacer fluid is between 0.1% and 5.0% by weight of water.

12. The method of any one of claims 8-11, wherein the spacer fluid further comprises polystyrene sulfonate, styrene sulfonate/maleic anhydride copolymer or a combination thereof.

13. The method of any one of claims 8-12, wherein the spacer-fluid density is between 960 kg/m³ and 2640 kg/m³.

14. The method of any one of claims 8-13, wherein the spacer-fluid and cement-slurry temperature is between about 85°C and 300°C.

15. The method according to claims 8-14, wherein the cement slurry displaces or is displaced by the spacer fluid until the cement slurry fills the annular region between the casing string and the borehole wall.
